# NEUE EUROPÄISCHE PATENTSCHRIFT

(11) **EP 1 185 026 B2**
(45) Veröffentlichungstag und Bekanntmachung des Hinweises auf die Entscheidung über den Einspruch: **01.02.2017**
(45) Hinweis auf die Patenterteilung: 30.08.2006
(21) Anmeldenummer: 01120453.4
(22) Anmeldetag: 28.08.2001
(51) Int. Cl.: H04L 9/32

(54) **Verfahren zur Datenübertragung**
Method for data transmission
Procédé de transmission de données

(30) Priorität: 01.09.2000 DE 10043499
(43) Veröffentlichungstag der Anmeldung: 06.03.2002
(73) Patentinhaber: ROBERT BOSCH GMBH, 70442 Stuttgart (DE)
(72) Erfinder: Westendorf, Andreas, 31137 Hildesheim (DE); Fischer, Hans-Juergen, 31141 Hildesheim (DE)

(56) Entgegenhaltungen:
- EP-A- 0 602 920
- EP-A- 0 813 132
- EP-A- 0 873 032
- EP-A- 0 939 012
- EP-A- 0 986 209
- RIGNEY, C., RUBENS, A., SIMPSON, W., WILLENS, S.: "Remote Authentication Dial In User Service (RADIUS)" IETF REQUEST FOR COMMENTS 2138, [Online] 1997, XP002228330 Gefunden im Internet: <URL:http://www.cs.utk.edu/~moore/RFC-PDF/ rfc2138.pdf> [gefunden am 2003-01-22]

## Beschreibung

### Stand der Technik

Die Erfindung geht aus von einem Verfahren zur Datenübertragung nach der Gattung des Hauptanspruchs. Es ist schon ein Verfahren zur Datenübertragung aus der DE 44 42 357 A1 bekannt, bei der Daten zwischen einer Datenverarbeitungseinrichtung und einem Endgerät übertragen werden. Vor der Aufnahme der Übertragung von Daten erfolgt eine gegenseitige Authentifikation unter Verwendung von in jeweils einem Sicherheitsmodul der Datenverarbeitungseinrichtung und des Endgerätes gespeicherten Codes. Ferner wird ein Code übermittelt, aus dem es ersichtlich ist, ob die Datensätze während der Übertragung verändert wurden. Die Sicherheit der Übertragung ist damit an die Verwendung der Sicherheitsmodule gebunden.

Aus der EP 986209 A2 ist ein Authentifizierungssystem bekannt, das einen Benutzer anhand biometrischer Informationen identifiziert. Die biometrischen Informationen werden erfasst, über ein Netzwerk an einen Authentifizierungsserver übertragen, hierzu mit einer User-ID und einer gegebenenfalls weiteren Eingabe versehen und von dem Authentifizierungsserver überprüft. Ob die Identifikation erfolgreich war, wird zurückübertragen.

Aus der EP 873 032 A1 ist ein Authentifizierungssystem für ein Mobiltelefon bekannt. Zusätzlich zu einer Identifikation über die Rufverbindung selbst wird von dem Benutzer eine Identifizierungsnummer eingegeben und an eine Überprüfungseinheit übertragen. In Abhängigkeit von der Überprüfung wird eine Benutzung des Mobiltelefons ermöglicht.

Aus der US 5,568,552 A ist ein Computersystem bekannt, bei dem zu verschiedenen Zeiten eine Authorisierungsabfrage an eine mit dem Computersystem verbundene Hardwareeinheit geschickt wird, die als "dongle" bezeichnet wird. Diese Einheit erzeugt durch Zugriff auf gespeicherte, geheime Informationen eine Antwort, die an das Computersystem zurück übertragen wird. Das Programm, das auf dem Computersystem läuft, vergleicht die Antwort mit einer erwarteten Antwort und erlaubt eine weitere Programmausführung nur bei einer Übereinstimmung.

Aus dem Dokument "European Telecommunication Standard, Digital cellular telecommunications system (Phase 2); Specification of the Subscriber Identity Module - Mobile Equipment (SIM-ME) interface (GSM 11.11 version 4.21.1) ETS 300 608", Dezember 1999, Seiten 12 und 29, ist eine Funktion des Mobiltelefons bekannt, bei dem eine Zugangsinformation eines Benutzers für eine Mobiltelefon-Betriebskarte (SIM-Karte) von dem Mobiltelefon mit einer in der SIM-Karte gespeicherten Informationen verglichen wird. Hierbei wird die Nummer von Fehlversuchen erfasst. Nach drei aufeinanderfolgenden Fehlversuchen erfolgt eine Sperre, selbst bei Eingabe einer gültigen Identifikationsnummer. Nur bei Vorlage einer Unblock-Eingabe ist eine Freischaltung möglich.

Das erfindungsgemäße Verfahren mit den Merkmalen des Hauptanspruchs hat den Vorteil, dass Daten, die an eine erste Recheneinheit übermittelt werden, zusätzlich dadurch geprüft werden, dass auf die ersten Daten bezogene zweite Daten an eine zweite Recheneinheit übermittelt werden und mittels einer Überprüfung der zweiten Daten eine Korrektheit der ersten Daten überprüft wird. Während gemäß der DE 4442357 A1 die Sicherheit einer Datenübertragung lediglich durch das dem Endgerät zugeordnete Sicherheitsmodul gewährleistet wird, ist mit dem erfindungsgemäßen Verfahren eine zusätzliche Überprüfung durch eine unabhängige, zweite Recheneinheit möglich. Insbesondere kann hierdurch ein unberechtigtes Übertragen von ersten Daten auf die erste Recheneinheit durch die zweite Recheneinheit auch dann ermittelt werden, wenn z.B. die ersten Daten aus einer nicht autorisierten Quelle stammen, z.B. von einer nicht autorisierten Kopie eines Datenträgers, oder wenn z.B. erste Daten von einer dritten Recheneinheit durch einen Unberechtigten übertragen werden. Die Datensicherheit ist nicht mehr an ein Sicherheitsmodul gebunden, das auch entwendet werden kann, sondern wird von der zusätzlichen zweiten Recheneinheit gewährleistet.

Weiterhin ist vorteilhaft, dass eine Benutzung der ersten Daten durch die zweite Recheneinheit erlaubt wird, so dass erst nach Übermittlung dieser Erlaubnis an die erste Recheneinheit, also nach Freigabe der Daten durch die zweite Recheneinheit, die ersten Daten in der Recheneinheit verwendet werden können, so dass die Verwendung von unberechtigten Kopien der ersten Daten oder von falschen ersten Daten in der ersten Recheneinheit vermieden wird.

Zudem wird vorteilhaft ein Verbot der Benutzung der ersten Daten von der zweiten Recheneinheit an die erste Recheneinheit übermittelt, falls die ersten Daten nicht in der ersten Recheneinheit verwendet werden dürfen, und falls die ersten Daten in der ersten Recheneinheit verwendet werden dürfen, wird eine Erlaubnis zur Verwendung der ersten Daten von der zweiten Recheneinheit an die erste Recheneinheit übermittelt.

Ferner wird vorteilhaft erfindungsgemäß die Erlaubnis in einem nichtflüchtigen Speicher der ersten Recheneinheit gespeichert, falls die erste Recheneinheit die ersten Daten verwenden darf.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, dass in der ersten Recheneinheit und/oder in der zweiten Recheneinheit jeweils eine fehlerfreie Übermittlung der Daten geprüft wird, da hierdurch neben einem Eingriff in die Datenübermittlung auch Übertragungsfehler erfasst werden können und eine Übermittlung nach Feststellung eines derartigen Übertragungsfehlers wiederholt werden kann.

Weiterhin ist vorteilhaft, dass die ersten Daten von einem Datenträgerlaufwerk oder von einer dritten Recheneinheit an die erste Recheneinheit übermittelt werden und dass durch die zweite Recheneinheit die Identität der dritten Recheneinheit beziehungsweise des Datenträgers geprüft wird, da hierdurch unberechtigte Kopien eines Datenträgers oder die Übermittlung von einer zur Datenübertragung nicht berechtigten dritten Recheneinheit erfasst werden kann.

Weiterhin ist vorteilhaft, die Daten verschlüsselt zu übertragen, insbesondere verschlüsselt mit einem privaten Schlüssel der jeweiligen übertragenden Recheneinheit und mit einem zu übermittelnden, öffentlichen Schlüssel der jeweiligen, empfangenden Recheneinheit, da hierdurch neben einem sicheren Datentransport auch direkt eine sichere Identifizierung der jeweils sendenden Recheneinheit möglich ist. Mit einer elektronischen Unterschrift, also durch eine eindeutige, fälschungssichere elektronische Kennzeichnung des Absenders in Datenform kann eine Identifizierung ermöglicht werden.

Weiterhin ist eine Funkübertragung vorteilhaft, da hierdurch ein Anschluß an ein feststehendes Kommunikationsnetz vermeidbar ist und somit eine mobile Anwendung des Verfahrens möglich ist.

Weiterhin ist vorteilhaft, dass von der zweiten Recheneinheit für eine Prüfung der zweiten Daten auf eine Datenbank zurückgegriffen wird, in der z.B. alle zur Übertragung berechtigten dritten Recheneinheiten, alle berechtigten Datenträger und/oder alle zur Speicherung der jeweiligen ersten Daten berechtigten ersten Recheneinheiten abgelegt sind, so dass eine umfassende Überprüfung möglich wird.

Weiterhin ist vorteilhaft, dass von der zweiten Recheneinheit in Abhängigkeit von den zweiten Daten ein Zahlungsvorgang veranlasst wird, so dass eine Berechnung der übertragenen ersten Daten durch die zweite Recheneinheit möglich ist. Hierdurch kann sichergestellt werden, dass ein Benutzer, der ein Programm in Form von ersten Daten mit der ersten Recheneinheit benutzt, erst bei der tatsächlichen Übertragung dieser Daten auf die erste Recheneinheit eine Gebühr bezahlt. Hierdurch kann sichergestellt werden, dass ein Benutzer Daten erst dann bezahlen muss, wenn er sie tatsächlich verwendet, und nicht bereits während er lediglich die Kontrolle über die jeweiligen Daten hat, z.B. durch Besitz eines Datenträgers mit diesen Daten. Auch ist es möglich, auf diese Weise mittels der zweiten Recheneinheit Zahlungsvorgänge zu autorisieren, d.h. Zahlungsvorgänge z.B. in der Form von Kreditkartenzahlungen oder Kaufaufträgen für Waren oder Dienstleistungen, deren Datensätze an die erste Recheneinheit übermittelt wurden.

Weiterhin ist vorteilhaft, dass von der zweiten Recheneinheit eine Nutzung der ersten Daten durch die erste Recheneinheit gespeichert wird, so dass ein Nutzerprofil für die ersten Daten anhand der von der zweiten Recheneinheit gespeicherten Daten erstellt werden kann.

Weiterhin ist vorteilhaft, dass eine Prüfung in der ersten Recheneinheit neu gestartet wird, wenn die Prüfung nicht vollständig durchlaufen wurde. Hierdurch wird vermieden, dass bei einem absichtlichen oder unabsichtlichen Unterbrechen des Prüfvorgangs, z.B. durch einen Stromausfall, einzelne Prüfschritte übergangen werden können.

Weiterhin ist vorteilhaft, dass ein Programm zur Prüfung und/oder ein Prüfergebnis in der zweiten Recheneinheit nicht flüchtig gespeichert wird. Einerseits wird hierdurch eine mögliche Fälschung des Programms zur Prüfung der ersten Daten bzw. eine Fälschung eines Prüfergebnisses vermieden. Außerdem muss eine Überprüfung der ersten Daten bei einer nicht flüchtigen Speicherung des Prüfergebnisses nicht bei jedem Neustart der ersten Recheneinheit erneut durchgeführt werden.

Weiterhin ist vorteilhaft, dass die ersten Daten in der ersten Recheneinheit gelöscht werden, wenn von der zweiten Recheneinheit keine Benutzungserlaubnis der ersten Daten übermittelt wird. Eine unberechtigte Benutzung der ersten Daten in der ersten Recheneinheit wird hierdurch vermieden. Insbesondere ist dies vorteilhaft, wenn die Nutzung der ersten Daten zeitlich beschränkt ist, so dass bei einer regelmäßigen Überprüfung einer Benutzungserlaubnis nach Ablauf einer vorgegebenen Zeitspanne ein Erlöschen der Benutzungserlaubnis festgestellt wird und die ersten Daten automatisch von der ersten Recheneinheit gelöscht werden.

Weiterhin ist vorteilhaft, eine Warnung auszugeben, wenn die ersten Daten nicht freigegeben werden, so dass ein Benutzer darüber informiert wird, dass er die ersten Daten nicht nutzen kann und er gegebenenfalls eine andere Bezugsquelle für die ersten Daten suchen muss.

Weiterhin ist vorteilhaft, in die zweiten Daten einen Prüfcode bezüglich der ersten Daten beziehungsweise der Identität der ersten Recheneinheit mit einzubeziehen.

Weiterhin ist vorteilhaft, insbesondere ein Steuergerät in einem Kraftfahrzeug als eine erste Recheneinheit auszuführen, in das Daten von einer dritten Recheneinheit beziehungsweise von einem Datenträger übermittelt werden. Insbesondere bei Systemen eines Kraftfahrzeugs, die für die Fahrzeugsicherheit relevant sind, ist hierdurch eine Kontrolle der übermittelten Daten möglich, so dass eine Funktion der sicherheitsrelevanten Systeme des Fahrzeugs nicht durch unberechtigt übermittelte Daten oder fehlerhafte Daten gefährdet werden kann.

### Zeichnung

Ausführungsbeispiele der Erfindung sind in der Zeichnung dargestellt und in der nachfolgenden Beschreibung näher erläutert. Es zeigen Figur 1 ein erstes Ausführungsbeispiel für eine Vorrichtung zur Durchführung des erfindungsgemäßen Verfahrens, Figur2 ein zweites Ausführungsbeispiel für eine erfindungsgemäße Vorrichtung zur Durchführung des erfindungsgemäßen Verfahrens, Figur3 ein drittes Ausführungsbeispiel für eine erfindungsgemäße Vorrichtung zur Durchführung des erfindungsgemäßen Verfahrens und Figur 4 einen erfindungsgemäßen Verfahrensablauf.

### Beschreibung des Ausführungsbeispiels

Das erfindungsgemäße Verfahren zur Datenübertragung kann für eine Vielzahl von Anwendungsfällen, insbesondere für verschiedene zu übertragende Daten verwendet werden. Bei den Daten kann es sich z.B. um Programmdaten, also um Daten zur Steuerung einer Recheneinheit oder eines Geräts handeln sowie um Daten, die Informationen beinhalten, z.B. Daten von Telefonnummern, Adressen und Land- und Straßenkarten. Ferner können als erste Daten z.B. auch Daten für einen Zahlungsvorgang, einen Kaufvorgang oder einen Buchungsvorgang übertragen werden. Entsprechend kann die erste Recheneinheit als eine Recheneinheit ausgeführt sein, die einen Programmablauf anhand der ersten Daten steuert, so z.B. ein Steuergerät in einem Fahrzeug, oder ein elektrisches Gerät im Haushalt bzw. in einem industriellen Einsatz. Die erste Recheneinheit kann ferner als Teil einer Vorrichtung zur vorzugsweise gezielten Wiedergabe der übermittelten ersten Daten sein. Ferner kann die erste Recheneinheit in eine Vorrichtung zur Durchführung des Zahlungs-, Kauf oder Buchungsvorgangs integriert sein.

Das erfindungsgemäße Verfahren wird im Folgenden anhand der Verwendung für ein Steuergerät in einem Kraftfahrzeug erläutert, bei dem erste Daten in Form von Programmdaten und/oder Informationen an die erste Recheneinheit, also das Steuergerät, übermittelt werden. Das Verfahren kann ohne Weiteres auch in anderen Fahrzeugen verwendet werden, so z.B. in Flugzeugen, in Schiffen oder in Schienenfahrzeugen.

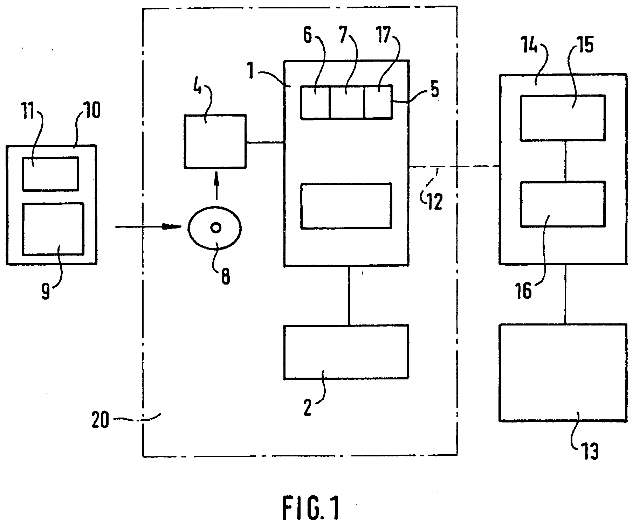

In der Figur 1 ist ein Steuergerät 1 in einem Kraftfahrzeug 20 dargestellt, das mit einem Fahrzeugsystem 2 verbunden ist. Das Fahrzeugsystem 2 ist z.B. eine Motorsteuerung, die einen Verbrennungsvorgang im Fahrzeugmotor oder eine Kraftumsetzung des Fahrzeugmotors steuert, eine Anzeigevorrichtung im Fahrzeug zur Darstellung von anzuzeigenden Informationen oder eine Navigationsvorrichtung, die Fahrhinweise an einen Benutzer des Fahrzeugs ausgibt. In dem Steuergerät 1 ist eine erste Recheneinheit 3 angeordnet. Ferner verfügt das Steuergerät 1 über einen nicht flüchtigen Speicher 5, der zumindest in einen ersten Bereich 6, einen zweiten Bereich 7 und einen dritten Bereich 17 aufgeteilt ist. Das Steuergerät 1 ist ferner mit einem ersten Datenträgerlaufwerk 4 für einen Datenträger 8 verbunden, das ebenfalls in dem Fahrzeug 20 angeordnet ist. Der Datenträger 8 wird in einer Vorrichtung zur Datenträgverarbeitung 10 mit Daten von einer dritten Recheneinheit 11 in einem zweiten Datenträgerlaufwerk 9 beschrieben. Das Steuergerät 1 ist ferner über eine erste Funkverbindung 12 mit einer Prüfeinheit 14 verbunden. Die Prüfeinheit 14 verfügt über eine zweite Recheneinheit 15 und eine Datenbank 16 und ist mit einer Verrechnungsstelle 13 verbunden.

Von der Vorrichtung zur Datenträgverarbeitung 10 werden Daten der dritten Recheneinheit 11 mittels des zweiten Datenträgerlaufwerks 9 auf den Datenträger 8 geschrieben. Der Datenträger 8 ist vorzugsweise als ein optischer und/oder als ein magnetischer Datenträger ausgeführt. Bei Verwendung eines optischen Datenträgers ist auch eine mechanische Herstellung des Datenträgers in dem zweiten Datenträgerlaufwerk 9 möglich. Die Vorrichtung zur Datenträgverarbeitung 10 ist außerhalb des Fahrzeugs 20 angeordnet.

Der Datenträger 8 wird von einem Benutzer in das Fahrzeug 20 gebracht und in das erste Datenträgerlaufwerk 4 eingelegt. Die auf dem Datenträger 8 gespeicherten Daten werden von dem ersten Datenträgerlaufwerk 4 gelesen und an die erste Recheneinheit 3 übermittelt. Die erste Recheneinheit 3 erkennt neu übermittelte, erste Daten und startet ein in dem ersten Bereich 6 des nicht flüchtigen Speichers 5 gespeicherten Programm zur Prüfung der ersten Daten, die ausgehend von der dritten Recheneinheit 11 mittels des Datenträgers 8 in einen flüchtigen Speicher der ersten Recheneinheit 3 übermittelt wurden. Die erste Recheneinheit 3 baut eine erste Funkverbindung 12 zu der Prüfeinheit 14 auf und stellt somit einen Kontakt zu der Prüfeinheit 14 her. Ferner bestimmt die erste Recheneinheit 3 gemäß dem Programm, das in dem ersten Bereich 6 abgelegt ist, zweite Daten, die sich auf die übermittelten, ersten Daten beziehen. Die zweiten Daten können hierbei z.B. eine Identitätsnummer des Datenträgers 8 und/oder eine Prüfsumme, z.B. die Summe oder die Quersumme einer vorgegebenen Folge von Bytes der ersten Daten, Ausschnitte oder eine sonstige Codierung der ersten Daten enthalten. In einem weiteren Ausführungsbeispiel ist auch eine zumindest partielle Übertragung der ersten Daten als zweite Daten an die Prüfeinheit 14 möglich. In der Prüfeinheit 14 werden die von dem Steuergerät 1 mittels der ersten Funkverbindung 12 übermittelten zweiten Daten anhand eines Vergleichs mit in der Datenbank 16 gespeicherten Daten geprüft. Hierbei ist z.B. eine Prüfung einer Identitätsnummer des Datenträgers 8 und/oder einer Identitätsnummer der ersten Recheneinheit 3 möglich. Hiermit kann z.B. überprüft werden, ob der Besitzer der ersten Recheneinheit 3 zur Benutzung des Datenträgers 8 befugt ist. Ferner kann überprüft werden, ob die auf dem Datenträger 8 gespeicherten ersten Daten durch die erste Recheneinheit 3 verwendet werden können, insbesondere ob der Datenträger 8 eine befugte Kopie der ersten Daten beinhaltet bzw. ob die ersten Daten überhaupt zu einer Verwendung in der zweiten Recheneinheit 15 bzw. 27 geeignet sind oder ob z.B. eine falsche oder veraltete Version der ersten Daten vorliegt. Ist dies der Fall, so wird eine Benutzungserlaubnis über die erste Funkverbindung 12 an die erste Recheneinheit 3 übermittelt. Die erste Recheneinheit 3 speichert in dem zweiten Bereich 7 des nicht flüchtigen Speichers 5, dass die Benutzung der ersten Daten durch die erste Recheneinheit 3 erlaubt ist. In einem bevorzugten Ausführungsbeispiel wird in dem dritten Bereich 17 des nicht flüchtigen Speichers 5 zumindest ein Teil der ersten Daten gespeichert. Die ersten Daten können auch in einem in der Figur nicht gezeigten, mit dem Steuergerät 1 verbundenen Massenspeicher, so z.B. einer Festplatte, in dem Fahrzeug 20 gespeichert werden. Die ersten Daten können nun von der ersten Recheneinheit 3 entweder unter Zugriff auf den Datenträger 8, den dritten Bereich 17 und/oder den Massenspeicher genutzt werden, um das Fahrzeugsystem 2 zu steuern, also z.B. eine Benzineinspritzung, eine Motorsteuerung oder eine Anzeigeeinheit zu beeinflussen. In einem bevorzugten Ausführungsbeispiel wird das Erteilen der Benutzungserlaubnis an eine Verrechnungsstelle 13 weitergeleitet, von der der Benutzer des Fahrzeugs 20 mit den Kosten für die Benutzung der ersten Daten belastet wird, indem z.B. ein Kreditkartenkonto des Benutzers belastet wird. In einem bevorzugten Ausführungsbeispiel erfolgt die erste Funkverbindung 12 über eine gesicherte Verbindung, indem von der ersten Recheneinheit 3 die zu übermittelten zweiten Daten codiert und von der zweiten Recheneinheit 15 wieder decodiert werden. Ebenso gilt dies für die umgekehrte Übertragung einer Benutzungserlaubnis von der zweiten Recheneinheit 15 an die erste Recheneinheit 3. Für eine Codierung wird insbesondere ein privater Schlüssel jeweils der ersten Recheneinheit 3 beziehungsweise der zweiten Recheneinheit 15 verwendet, so dass eine Identifizierung der übertragenden Recheneinheit möglich ist und eine Fälschung einer Benutzungserlaubnis unterbunden wird.

In einem bevorzugten Ausführungsbeispiel ist der nicht flüchtige Speicher 5 als ein Halbleiterbaustein ausgeführt, der fest in das Steuergerät 1 eingebaut ist, so dass eine Umgehung der Prüfung nur durch ein Ersetzen des nicht flüchtigen Speichers 5 möglich ist. Die Vorrichtung zur Datenträgverarbeitung 10 kann sich im Besitz des Benutzers des Fahrzeugs befinden, der mittels eines Abrufs über ein Datennetz, z.B. dem Internet, Daten lädt und diese mittels der Vorrichtung zur Datenträgverarbeitung 10 auf den Datenträger 8 und mit diesem in das Fahrzeug 20 bringt. Ferner kann die Vorrichtung zur Datenträgverarbeitung 10 auch von einem Hersteller des Steuergeräts 1 oder eines anderen kommerziellen Anbieters von Daten für das Fahrzeug 20 bzw. für das Steuergerät 1 betrieben werden. Mit einer Überprüfung über die Prüfeinheit 14, die vorzugsweise ebenfalls von dem Herstellers des Fahrzeugs 20 oder des Steuergeräts 1 betrieben wird, kann eine unsachgemäße oder verbotene Benutzung von Daten in dem Steuergerät 1 vermieden werden. Wird von der Prüfeinheit 14 eine Benutzungserlaubnis versagt, oder trifft von der Prüfeinheit 14 keine Antwort bei der ersten Recheneinheit 3 ein, so werden die in der ersten Recheneinheit 3 abgelegten ersten Daten in dem Fahrzeug 20 gelöscht. In einem bevorzugten Ausführungsbeispiel wird eine Benutzungsanfrage bei der Prüfeinheit 14 nach vorgebbaren Zeitabständen wiederholt ausgeführt, so dass eine zeitliche Beschränkung der Nutzung der ersten Daten möglich und überprüfbar ist.

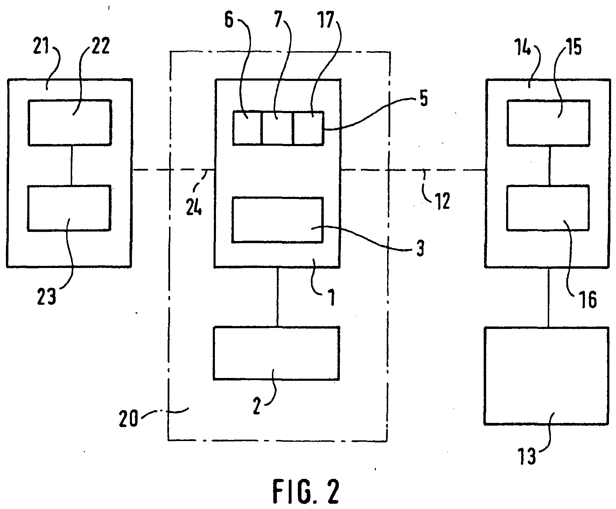

In der Figur2 ist ein zweites Ausführungsbeispiel für eine Vorrichtung zur Durchführung des erfindungsgemäßen Verfahrens dargestellt. Hier und im Folgenden bezeichnen gleiche Bezugszeichen auch die gleichen Elemente. Das Steuergerät 1 ist über eine zweite Funkverbindung 24 mit einer Dienstezentrale 21 verbindbar, die über eine dritte Recheneinheit 22 und über einen Datenspeicher 23 verfügt. Über die zweite Funkverbindung 24 sind in dem Datenspeicher 23 gespeicherte erste Daten von der ersten Recheneinheit 3 von der Dienstzentrale abrufbar. Die dritte Recheneinheit 22 übermittelt so auf Anforderung durch die erste Recheneinheit 3 in dem Datenspeicher abgelegte erste Daten über die zweite Funkverbindung 24 an die erste Recheneinheit 3 des Steuergeräts 1. Ein Datenträgerlaufwerk in dem Fahrzeug 20 ist bei diesem Ausführungsbeispiel nicht erforderlich, kann jedoch ergänzend verwendet werden.

Die erste Funkverbindung 12 und die zweite Funkverbindung 24 sind vorzugsweise als Mobilfunkverbindung (z.B. GSM, UMTS) ausgeführt. Hierbei ist die zweite Funkverbindung 24 insbesondere als eine Funkverbindung ausgeführt, die einen hohen Datendurchsatz ermöglicht, um auch große Datenmengen z.B. für Kartendaten für eine Navigationsvorrichtung oder für Programmdaten für eine Motorsteuerung, in einer für einen Benutzer akzeptablen Zeit übertragen zu können. Ferner ist auch möglich, dass sowohl die Dienstezentrale 21, das Steuergerät 1 und die Prüfeinheit 14 jeweils mit einem Datennetz, so z.B. dem Internet, verbunden sind und eine Kommunikation zwischen den einzelnen Einheiten jeweils über das Datennetz erfolgt. Eine Funkschnittstelle für die erste Funkverbindung 12 kann auch für die zweite Funkverbindung verwendet werden.

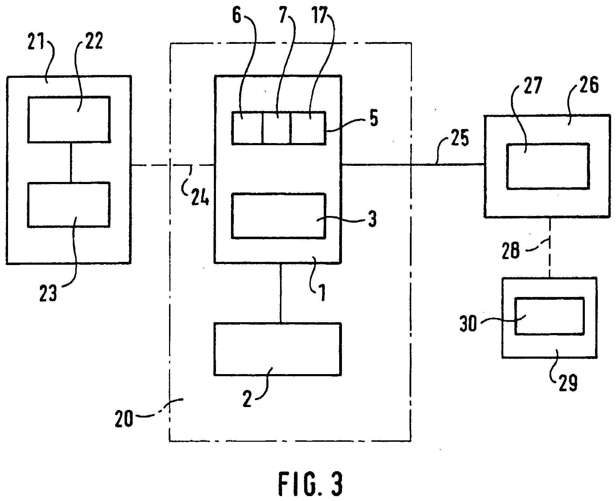

In der Figur 3 ist ein weiteres Ausführungsbeispiel dargestellt, bei dem die Prüfeinheit 14 durch eine Diagnosevorrichtung 26 ersetzt ist, die über eine Steckerverbindung 25 mit dem Fahrzeug 20 beziehungsweise mit dem Steuergerät 1 verbunden wird. In der Diagnosevorrichtung 26 ist eine zweite Recheneinheit 27 angeordnet, mit der die zweiten Daten überprüft werden, die von der ersten Recheneinheit 3 über die Steckerverbindung 25 an die zweite Recheneinheit 27 übermittelt werden. Die ersten Daten sind der ersten Recheneinheit 3, wie in der Figur 3 dargestellt, über die zweite Funkverbindung 24 zuführbar. In einem in der Figur 3 nicht dargestellten Ausführungsbeispiel ist auch eine Zuführung der ersten Daten mittels eines Datenträgers 8 gemäß dem Ausführungsbeispiel der Figur 1 an die dritte Recheneinheit möglich. Durch die Verwendung der Diagnosevorrichtung 26 ist eine Überprüfung der Korrektheit der in dem Steuergerät 1 gespeicherten ersten Daten, z.B. in einer Werkstatt, auch möglich, ohne eine Funkverbindung aufzubauen. Eine Prüfung kann dabei durch die Diagnosevorrichtung 26 gestartet werden. Unzulässige erste Daten können dabei aus dem Steuergerät 1 gelöscht werden. In einem bevorzugten Ausführungsbeispiel ist die Diagnosevorrichtung 26 über eine dritte Funkverbindung 28 mit einer Datenbank 30 in einer zweiten Dienstzentrale 29 verbindbar, durch die z.B. eine Identität der ersten Recheneinheit beziehungsweise eine Erlaubnis zur Benutzung von ersten Daten durch die erste Recheneinheit überprüft werden kann. Die zweite Dienstzentrale 29 wird dabei vorzugsweise von dem Hersteller des Fahrzeugs 20 oder dem Hersteller des Steuergeräts 1 betrieben.

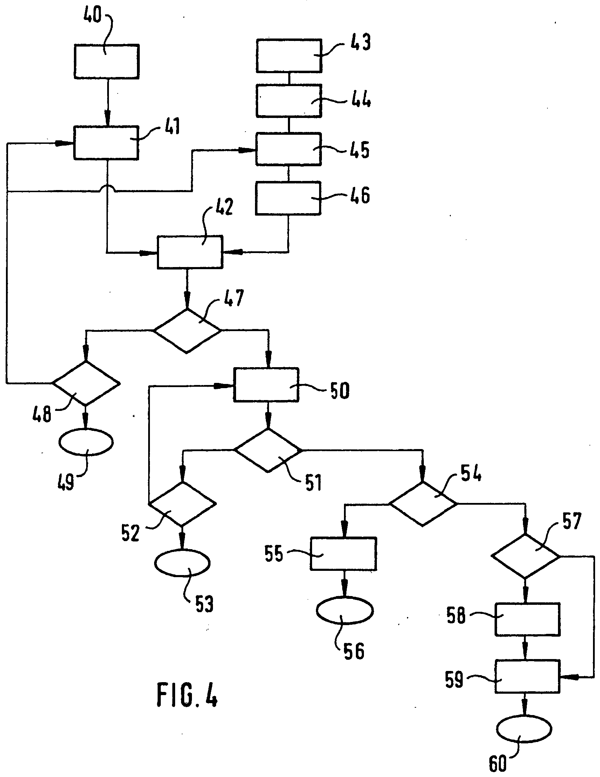

In der Figur 4 ist ein erstes Ausführungsbeispiel für den Ablauf des erfindungsgemäßen Verfahrens dargestellt. Das Verfahren ist dabei für die Übertragung von ersten Daten an die erste Recheneinheit sowohl mittels eines Datenträgers 8 als auch mittels einer Übertragung von ersten Daten von einer Dienstezentrale 21 anwendbar. In einem Initialisierungsschritt 40 wird das erfindungsgemäße Verfahren durch das Einlegen des Datenträgers 8 in das erste Datenträgerlaufwerk 4 gestartet. In einem anschließenden Ladeschritt 41 werden die ersten Daten von dem Datenträger 8 an die erste Recheneinheit 3 übertragen. Danach wird mit einem Ermittlungsschritt 42 der Prüfvorgang eingeleitet.

Werden die Daten von einer Dienstezentrale 21 an die erste Recheneinheit 3 übermittelt, so beginnt der Verfahrensablauf mit einem Anfrageschritt 43, mit dem erste Daten von der Dienstezentrale 21 über die zweite Funkverbindung 24 von der ersten Recheneinheit 3 abgerufen werden. In einem Verschlüsselungsschritt 44 werden die ersten Daten von der dritten Recheneinheit 22 verschlüsselt und/oder elektronisch unterschrieben und in einem anschließenden Übertragungsschritt 45 an die erste Recheneinheit 3 übermittelt. In einem darauffolgenden Decodierschritt 46 werden die übermittelten, verschlüsselten und/oder elektronisch unterschrieben Daten von der ersten Recheneinheit 3 decodiert. In einem bevorzugten Ausführungsbeispiel wird dabei ein öffentlich zugänglicher Schlüssel der ersten Recheneinheit 3 zum Verschlüsseln und/oder elektronischen Unterschreiben der Daten in der dritten Recheneinheit 22 verwendet, so dass die Daten nur von der ersten Recheneinheit 3 entschlüsselt und/oder die elektronische Unterschrift geprüft werden können, wobei die erste Recheneinheit über den zugehörigen privaten Schlüssel zur Entschlüsselung verfügt. Ferner wird zur Verschlüsselung ein privater Schlüssel der dritten Recheneinheit 22 verwendet, so dass eine eindeutige Identifizierung der Datenquelle möglich ist. Mit dem Ermittlungsschritt 42 wird das Prüfverfahren gestartet. Sollte das Prüfverfahren vor seinem Ablauf unterbrochen werden, so z.B. durch einen Stromausfall, muss das Prüfverfahren zumindest wieder ausgehend von dem Ermittlungsschritt 42 begonnen werden, in dem festgestellt wird, dass eine Übertragung von ersten Daten an die erste Recheneinheit 3 beendet wurde, bzw. in dem festgestellt wird, dass die ersten Daten auf einem Datenträger zur Verfügung stehen. Mit Beginn des anschließenden Prüfablaufs wird vorzugsweise in dem nicht flüchtigen Speicher 5, vorzugsweise in dem zweiten Bereich 7, in dem das Prüfergebnis gespeichert wird, ein Code dafür gespeichert, dass ein Prüfverfahren läuft. Wird nun die Stromzufuhr zu dem Steuergerät unterbrochen, so wird bei einem erneuten Start des Steuergerätes 1 festgestellt, dass ein Prüfverfahren nicht beendet wurde und das Prüfverfahren wird ausgehend von dem Ermittlungsschritt 42 neu gestartet.

An den Ermittlungsschritt 42 schließt sich ein erster Prüfschritt 47 an, in dem überprüft wird, ob die an die erste Recheneinheit 3 übermittelten Daten korrekt übertragen wurden. Eine korrekte Übertragung liegt z.B. bei einer fehlerfreien Entschlüsselung vor, sofern die Daten verschlüsselt übertragen wurden. Ferner können den ersten Daten auch Paritätsdaten zugefügt sein, aus denen Übertragungsfehler ermittelbar sind. Wird festgestellt, dass die Daten nicht korrekt übertragen wurden, so wird zu einem zweiten Prüfschritt 48 verzweigt, in dem überprüft wird, ob das Übertragen von Daten an die erste Recheneinheit 3 bereits mehrmals erfolglos war. Eine Toleranzschwelle ist hierbei vorgebbar. Werden z.B. Daten von einem Datenträger 8 gelesen, so ist problemlos ein mehrfacher Versuch möglich, die Daten von dem möglicherweise leicht verschmutzten oder beschädigten Datenträger zu lesen. Werden Daten über eine Funkverbindung übertragen, so können bei einer mehrfachen Wiederholung hohe Übertragungskosten verursacht werden. Daher ist hier die Anzahl der Versuche zu beschränken, z.B. auf drei Übertragungsversuche. Wird in dem zweiten Prüfschritt festgestellt, dass eine fehlerfreie Übertragung mehrfach nicht möglich war, so wird zu einem Endschritt 49 verzweigt, in dem eine Warnung an einen Benutzer ausgegeben wird, dass eine Übertragung beziehungsweise eine Verwendung der ersten Daten in dem Steuergerät 1 nicht möglich ist. Wird dagegen in dem zweiten Prüfschritt 48 festgestellt, dass noch mindestens ein Versuch zur Übertragung durchgeführt werden soll, so wird zu dem Ladeschritt 41 beziehungsweise zu dem Übertragungsschritt 45 zurück verzweigt.

Wird in dem ersten Prüfschritt 47 festgestellt, dass die ersten Daten fehlerfrei an die erste Recheneinheit übertragen wurden, so wird zu einem Übermittlungs- und Übertragungsschritt 50 verzweigt, in dem aus den ersten Daten ein Prüfcode ermittelt wird, so z.B. eine Prüfsumme, eine Abfolge bestimmter Zeichen der ersten Daten oder andere, vorgebbare Teile der ersten Daten. Vorzugsweise wird den zweiten Daten eine Identität, vorzugsweise eine Identitätsnummer der ersten Recheneinheit 3, des Datenträgers 8 und/oder der dritten Recheneinheit 22 zugefügt. In dem Ermittlungs- und Übertragungsschritt 50 werden diese Daten vorzugsweise verschlüsselt und/oder elektronisch unterschrieben an die Prüfeinheit 14 beziehungsweise die Diagnosevorrichtung 26 übertragen. Eine Verschlüsselung der zweiten Daten erschwert es, eine Prüfeinheit 14 beziehungsweise eine Diagnosevorrichtung 26 zu simulieren und damit einen Prüfvorgang der ersten Daten durch eine unerlaubte Fälschung einer Prüfeinheit 14 bzw. einer Diagnosevorrichtung 26 zu umgehen. In einem anschließenden dritten Prüfschritt 51 wird eine fehlerfreie Übertragung der zweiten Daten von der ersten Recheneinheit 3 an die zweite Recheneinheit 15 gemäß dem Ausführungsbeispiel der Figuren 1 und 2 bzw. an die zweite Recheneinheit 27 gemäß dem Ausführungsbeispiel der Figur 3 überprüft. Wird keine fehlertreie Übertragung festgestellt, so wird zu einem vierten Prüfschritt 52 verzweigt, in dem überprüft wird, ob mehrmals eine fehlerfreie Übertragung der zweiten Daten nicht möglich war. Wird festgestellt, dass mehrfach die zweiten Daten nicht korrekt übertragen werden konnten, wobei hier ebenfalls die Anzahl für ein maximales, fehlerhaftes Übertragen vorgebbar ist, so wird zu einem Endschritt 53 verzweigt. In dem Endschritt 53 wird von der zweiten Recheneinheit 15 bzw. 27 an die erste Recheneinheit 3 als ein Ergebnis übermittelt, dass die zweiten Daten nicht fehlerfrei übertragen werden konnten. Dies wird von der ersten Recheneinheit ausgegeben, z.B. über eine Anzeige oder einen Lautsprecher, die in der Zeichnung nicht dargestellt sind. Sollte ein Kontakt zur zweiten Recheneinheit nicht möglich sein, so wird dies von der ersten Recheneinheit 3 ebenfalls festgestellt und ausgegeben. Das Prüfverfahren wird damit unterbrochen und gegebenenfalls zu einem späteren Zeitpunkt wieder neu ausgehend von dem Ermittlungsschritt 42 aufgenommen. Wird in dem vierten Prüfschritt 52 festgestellt, dass ein erneuter Versuch zur Übertragung der zweiten Daten möglich ist, so wird zu dem Ermittlungs- und Übertragungsschritt 50 zurück verzweigt und von der ersten Recheneinheit 3 werden die zweiten Daten erneut an die zweiten Recheneinheit 15 bzw. 27 übertragen.

Wird in dem dritten Prüfschritt 51 festgestellt, dass die zweiten Daten korrekt übertragen wurden, so wird zu dem fünften Prüfschritt 54 weiterverzweigt, in dem von der zweiten Recheneinheit 15 bzw. 27 die zweiten Daten dahingehend überprüft werden, ob die ersten Daten, auf die die zweiten Daten bezogen sind, in der ersten Recheneinheit 3 verwendet werden dürfen. Hierbei wird z.B. überprüft, ob die ersten Daten zulässige Daten zur Verwendung in der ersten Recheneinheit 3 sind. Ferner kann überprüft werden, ob die auf dem Datenträger 8 gespeicherten ersten Daten eine erlaubte Kopie der ersten Daten sind, oder ob z.B. eine Identitätsnummer des Datenträgers 8 bereits für eine Benutzung für eine andere erste Recheneinheit 3 registriert ist und damit ein Datenträger 8 als Original oder als Kopie unberechtigt verwendet wird. Hierzu wird in dem fünften Prüfschritt 54 die Datenbank 16 bzw. die Datenbank 30 abgefragt. Zusätzlich kann hierbei eine von einem Benutzer ergänzend anzugebende Persönliche Identifikationsnummer (PIN) oder eine Transaktionsnummer (TAN) überprüft werden, die von einem Benutzer in die erste Recheneinheit eingegeben werden.

Wird in dem fünften Prüfschritt 54 festgestellt, dass die ersten Daten in der ersten Recheneinheit 3 nicht benutzt werden dürfen, so wird zu einem Verbietungsschritt 55 verzweigt, in dem von der zweiten Recheneinheit 15 bzw. 27 ein Verbot der Benutzung der ersten Daten an die erste Recheneinheit übermittelt wird. Danach wird zu einem Endschritt 56 verzweigt, in dem die ersten Daten in der ersten Recheneinheit 3 und damit in dem ersten Steuergerät 1 und dem Fahrzeug 20 gelöscht werden. Wird in dem fünften Prüfschritt 54 festgestellt, dass eine Benutzung der ersten Daten durch die erste Recheneinheit 3 zulässig ist, so wird zu einem sechsten Prüfschritt 57 weiterverzweigt, in dem überprüft wird, ob für die Verwendung der ersten Daten durch die erste Recheneinheit 3 eine Bezahlung erforderlich ist. Ist eine Bezahlung erforderlich, so wird zu einem Verrechnungsschritt 58 weiterverzweigt, in dem dem Benutzer des Fahrzeugs 20 ein vorgegebener Betrag über die Verechnungsstelle 13 berechnet wird, z.B. durch eine Kreditkartenbelastung. Wird in dem sechsten Prüfschritt 57 festgestellt, dass eine Berechnung nicht erforderlich ist, so wird zu einem Erlaubnisschritt 59 weiterverzweigt. Der Erlaubnisschritt 59 wird auch von dem Verrechnungsschritt 58 aus erreicht. In dem Erlaubnisschritt 59 wird eine Erlaubnis zur Verwendung der ersten Daten durch die erste Recheneinheit 3 an die erste Recheneinheit 3 übermittelt. In einem anschließenden Verwendungsschritt 60 wird das Prüfverfahren beendet und ein positives Prüfergebnis für eine Erlaubnis zur Verwendung der ersten Daten in der ersten Recheneinheit 3 sowie ein Abschluss des Prüfverfahrens wird in dem nicht flüchtigen Speicher 5 gespeichert. Die an die erste Recheneinheit 3 übermittelten ersten Daten, so z.B. Programm- oder Informationsdaten, können nun durch die erste Recheneinheit 3 verwendet werden, indem das durch die ersten Daten beschriebene Programm ausgeführt oder die Informationen, die in den ersten Daten enthalten sind, von der ersten Recheneinheit 3 ausgewertet und/oder ausgegeben werden. Diese Verwendung ist entweder zeitlich unbegrenzt oder für einen vorgegebenen Zeitraum möglich, der dann vorzugsweise in dem nicht flüchtigen Speicher 5 mit abgelegt wird. Nach Ende dieses vorgegebenen Zeitraums wird eine erfindungsgemäße Prüfung erneut ausgehend von dem Ermittlungsschritt 42 durchgeführt, so dass entweder die ersten Daten von der ersten Recheneinheit 3 und damit auch aus dem Steuergerät 1 gelöscht werden oder dass eine neue Berechnung mit dem Verrechnungsschritt 58 des Prüfverfahrens erfolgt und hierdurch eine weitere Freigabe erreicht wird.

## Patentansprüche

1. Verfahren zur Datenübertragung, wobei erste Daten an eine erste Recheneinheit übermittelt werden, wobei die ersten Daten Programmdaten zur Steuerung einer Recheneinheit oder eines Geräts sind, wobei auf die ersten Daten bezogene zweite Daten an eine zweite Recheneinheit übermittelt werden, wobei die zweiten Daten in der zweiten Recheneinheit dahingehend geprüft werden, ob die ersten Daten in der ersten Recheneinheit verwendet werden dürfen und dass ein Prüfergebnis an die erste Recheneinheit übermittelt wird, wobei ein Verbot der Benutzung der ersten Daten von der zweiten Recheneinheit an die erste Recheneinheit übermittelt wird, falls die ersten Daten nicht in der ersten Recheneinheit verwendet werden dürfen, und wobei, falls die ersten Daten in der ersten Recheneinheit verwendet werden dürfen, eine Erlaubnis zur Verwendung der ersten Daten von der zweiten Recheneinheit an die erste Recheneinheit übermittelt wird, **dadurch gekennzeichnet, dass** die Erlaubnis in einem nichtflüchtigen Speicher der ersten Recheneinheit gespeichert wird, falls die erste Recheneinheit die ersten Daten verwenden darf.

2. Verfahren nach Anspruch 1, **dadurch gekennzeichnet, dass** die ersten Daten von einem Datenträgerlaufwerk oder von einer dritten Recheneinheit an die erste Recheneinheit übermittelt werden.

3. Verfahren nach Anspruch 2, **dadurch gekennzeichnet, dass** in der zweiten Recheneinheit eine Identität der dritten Recheneinheit und/oder des Datenträgers geprüft wird.

4. Verfahren nach einem der vorhergehenden Ansprüche, **dadurch gekennzeichnet, dass** in der ersten Recheneinheit und/oder in der zweiten Recheneinheit jeweils eine fehlerfreie Übermittlung der Daten geprüft wird.

5. Verfahren nach einem der vorhergehenden Ansprüche, **dadurch gekennzeichnet, dass** die zweiten Daten und/oder eine Benutzungserlaubnis der ersten Daten verschlüsselt und/oder elektronisch unterschrieben übertragen werden.

6. Verfahren nach Anspruch 5, **dadurch gekennzeichnet, dass** die zweiten Daten und/oder die Benutzungserlaubnis der ersten Daten mit einem privaten Schlüssel der jeweiligen Recheneinheit verschlüsselt und/oder elektronisch unterschrieben werden.

7. Verfahren nach einem der vorhergehenden Ansprüche, **dadurch gekennzeichnet, dass** die erste mit der zweiten Recheneinheit und/oder die zweite mit der dritten Recheneinheit über Funk verbunden werden.

8. Verfahren nach einem der vorhergehenden Ansprüche, **dadurch gekennzeichnet, dass** in der zweiten Recheneinheit für die Prüfung der zweiten Daten auf eine Datenbank zurückgegriffen wird.

9. Verfahren nach einem der vorhergehenden Ansprüche, **dadurch gekennzeichnet, dass** von der zweiten Recheneinheit in Abhängigkeit von den zweiten Daten ein Zahlungsvorgang veranlasst wird.

10. Verfahren nach einem der vorhergehenden Ansprüche, **dadurch gekennzeichnet, dass** von der zweiten Recheneinheit eine Nutzung der ersten Daten durch die erste Recheneinheit gespeichert wird.

11. Verfahren nach einem der vorhergehenden Ansprüche, **dadurch gekennzeichnet, dass** eine Prüfung in der ersten Recheneinheit neu gestartet wird, wenn die Prüfung nicht vollständig durchlaufen wurde.

12. Verfahren nach einem der vorhergehenden Ansprüche, **dadurch gekennzeichnet, dass** ein Programm zur Prüfung der ersten Daten und/oder ein Prüfergebnis in der zweiten Recheneinheit nichtflüchtig gespeichert wird.

13. Verfahren nach einem der vorhergehenden Ansprüche, **dadurch gekennzeichnet, dass** die ersten Daten in der ersten Recheneinheit gelöscht werden, wenn von der dritten Recheneinheit keine Benutzungserlaubnis der ersten Daten übermittelt wird.

14. Verfahren nach einem der vorhergehenden Ansprüche, **dadurch gekennzeichnet, dass** eine Warnung ausgegeben wird, wenn die ersten Daten nicht freigegeben werden.

15. Verfahren nach einem der vorhergehenden Ansprüche, **dadurch gekennzeichnet, dass** aus den ersten Daten ein erster Prüfcode bestimmt wird und dass die zweiten Daten zumindest teilweise aus dem ersten Prüfcode gebildet werden.

16. Verfahren nach einem der vorhergehenden Anspruch, **dadurch gekennzeichnet, dass** aus Daten der ersten Recheneinheit ein zweiter Prüfcode bestimmt wird und dass die zweiten Daten zumindest teilweise aus dem zweiten Prüfcode gebildet werden.

17. Vorrichtung mit zur Durchführung des Verfahrens nach einem der vorhergehenden Ansprüche geeigneten Mitteln.

18. Steuergerät für ein Kraftfahrzeug mit zur Durchführung des Verfahrens nach einem der Ansprüche 1-16 geeigneten Mitteln, **dadurch gekennzeichnet, dass** die erste Recheneinheit (3) in dem Steuergerät (1) angeordnet ist.

19. Prüfrecheneinheit mit zur Durchführung des Verfahrens nach einem der Ansprüche 1-16 geeigneten Mitteln, **dadurch gekennzeichnet, dass** die zweite Recheneinheit (15, 27) in der Prüfrecheneinheit (14, 26) angeordnet ist.

20. Dienstezentrale mit zur Durchführung des Verfahrens nach einem der Ansprüche 2-16 geeigneten Mitteln, **dadurch gekennzeichnet, dass** die dritte Recheneinheit (22) in der Dienstezentrale (21) angeordnet ist.

## Claims

1. Method for data transmission, where first data are transmitted to a first processor, where the first data are program data for controlling a processor or a device, with second data related to the first data being transmitted to a second processor, where the second data are checked in the second processor to determine whether the first data are permitted to be used in the first processor and that a check result is transmitted to the first processor, where a ban on the use of the first data is transmitted from the second processor to the first processor if the first data are not permitted to be used in the first processor, and where, if the first data are permitted to be used in the first processor, a permission to use the first data is transmitted from the second processor to the first processor, **characterized in that** the permission is stored in a non-volatile memory of the first processor if the first processor is permitted to use the first data.

2. Method according to Claim 1, **characterized in that** the first data are transmitted from a data storage medium drive or from a third processor to the first processor.

3. Method according to Claim 2, **characterized in that** the second processor checks an identity of the third processor and/or of the data storage medium.

4. Method according to one of the preceding claims, **characterized in that** the first processor and/or the second processor respectively checks correct transmission of the data.

5. Method according to one of the preceding claims, **characterized in that** the second data and/or a use permit for the first data are transmitted in encrypted and/or electronically signed form.

6. Method according to Claim 5, **characterized in that** the second data and/or the use permit for the first data are encrypted and/or electronically signed using a private key from the respective processor.

7. Method according to one of the preceding claims, **characterized in that** the first processor is connected to the second processor and/or the second processor is connected to the third processor by radio.

8. Method according to one of the preceding claims, **characterized in that** the second processor checks the second data by resorting to a database.

9. Method according to one of the preceding claims, **characterized in that** the second processor prompts a payment operation on the basis of the second data.

10. Method according to one of the preceding claims, **characterized in that** the second processor stores any use of the first data by the first processor.

11. Method according to one of the preceding claims, **characterized in that** a check in the first processor is restarted if the check has not been executed completely.

12. Method according to one of the preceding claims, **characterized in that** a program for checking the first data and/or a check result in the second processor is stored in non-volatile fashion.

13. Method according to one of the preceding claims, **characterized in that** the first data are deleted in the first processor if the third processor does not transmit a use permit for the first data.

14. Method according to one of the preceding claims, **characterized in that** a warning is output if the first data are not released.

15. Method according to one of the preceding claims, **characterized in that** the first data are used to determine a first check code, and **in that** the second data are formed at least partly from the first check code.

16. Method according to one of the preceding claims, **characterized in that** data from the first processor are used to determine a second check code, and **in that** the second data are formed at least partly from the second check code.

17. Apparatus having means suitable for carrying out the method according to one of the preceding claims.

18. Controller for a motor vehicle having means suitable for carrying out the method according to one of Claims 1-16, **characterized in that** the first processor (3) is arranged in the controller (1).

19. Checking processor having means suitable for carrying out the method according to one of Claims 1-16, **characterized in that** the second processor (15, 27) is arranged in the checking processor (14, 26),

20. Service centre having means suitable for carrying out the method according to one of Claims 2-16, **characterized in that** the third processor (22) is arranged in the service centre (21).

## Revendications

1. Procédé de transmission de données selon lequel on transmet des premières données à une première unité de calcul, les premières données étant des données de programme pour la commande d'une unité de calcul ou d'un appareil, des deuxièmes données se rapportant aux premières données étant transmises à une deuxième unité de calcul, les deuxièmes données étant vérifiées dans la deuxième unité de calcul pour savoir si les premières données dans la première unité de calcul peuvent être utilisées et qu'un résultat de la vérification est transmis à la première unité de calcul, une interdiction d'utilisation des premières données étant transmise de la deuxième unité de calcul à la première unité de calcul si les premières données ne peuvent pas être utilisées dans la première unité de calcul et si les premières données peuvent être utilisées dans la première unité de calcul, une autorisation d'utilisation des premières données est transmise de la deuxième unité de calcul à la première unité de calcul, **caractérisé en ce que** l'autorisation est mémorisée dans une mémoire non volatile de la première unité de calcul si la première unité de calcul peut utiliser les premières données.

2. Procédé selon la revendication 1, **caractérisé en ce qu'**on transmet les premières données à la première unité de calcul par un lecteur de support de données ou par une troisième unité de calcul.

3. Procédé selon la revendication 2, **caractérisé en ce qu'**on vérifie dans la deuxième unité de calcul une identité de la troisième unité de calcul et/ou du support de données.

4. Procédé selon l'une quelconque des revendications précédentes, **caractérisé en ce que** dans la première unité de calcul et/ou dans la deuxième unité de calcul on vérifie à chaque fois une transmission sans erreurs.

5. Procédé selon l'une quelconque des revendications précédentes, **caractérisé en ce qu'**on transmet de manière codée et/ou signée électroniquement, les deuxièmes données et/ou une autorisation d'utilisation des premières données.

6. Procédé selon la revendication 5, **caractérisé en ce que** les deuxièmes données et/ou l'autorisation d'utilisation des premières données sont codées et/ou signées électroniquement avec une clé privée de l'unité de calcul respective.

7. Procédé selon l'une quelconque des revendications précédentes, **caractérisé en ce que** la première unité de calcul est reliée à la deuxième et/ou la deuxième unité de calcul à la troisième par radio.

8. Procédé selon l'une quelconque des revendications précédentes, **caractérisé en ce que** dans la deuxième unité de calcul, un banc de données est utilisé pour la vérification des deuxièmes données.

9. Procédé selon l'une quelconque des revendications précédentes, **caractérisé en ce que** la deuxième unité de calcul déclenche une opération de paiement en fonction des deuxièmes données.

10. Procédé selon l'une quelconque des revendications précédentes, **caractérisé en ce que** la deuxième unité de calcul mémorise une utilisation des premières données par la première unité de calcul.

11. Procédé selon l'une quelconque des revendications précédentes, **caractérisé en ce qu**'une vérification dans la première unité de calcul est redémarrée si la vérification n'a pas été effectuée complètement.

12. Procédé selon l'une quelconque des revendications précédentes, **caractérisé en ce qu'**un programme pour la vérification des premières données et/ou un résultat de vérification est mémorisé de manière non volatile dans la deuxième unité de calcul.

13. Procédé selon l'une quelconque des revendications précédentes, **caractérisé en ce que** les premières données sont effacées dans la première unité de calcul si la troisième unité de calcul ne transmet pas d'autorisation d'utilisation des premières données.

14. Procédé selon l'une quelconque des revendications précédentes, **caractérisé en ce qu'**un avertissement est émis si les premières données ne sont pas autorisées.

15. Procédé selon l'une quelconque des revendications précédentes, **caractérisé en ce qu'**un premier code de vérification est déterminé à partir des premières données, et les deuxièmes données sont formées au moins partiellement à partir du premier code de vérification.

16. Procédé selon l'une quelconque des revendications précédentes, **caractérisé en ce qu'**un deuxième code de vérification est déterminé à partir de données de la première unité de calcul, et les deuxièmes données sont formées au moins partiellement à partir du deuxième code de vérification.

17. Dispositif comprenant des moyens appropriés pour la mise en oeuvre du procédé selon l'une quelconque des revendications précédentes.

18. Appareil de commande pour un véhicule automobile, comprenant des moyens appropriés pour la mise en oeuvre du procédé selon l'une quelconque des revendications 1 à 16, **caractérisé en ce que** la première unité de calcul (3) est disposée dans l'appareil de commande (1).

19. Unité de calcul de vérification comprenant des moyens appropriés pour la mise en oeuvre du procédé selon l'une quelconque des revendications 1 à 16, **caractérisée en ce que** la deuxième unité de calcul (15, 27) est disposée dans l'unité de calcul de vérification (14, 26).

20. Centrale de service comprenant des moyens appropriés pour la mise en oeuvre du procédé selon l'une quelconque des revendications 2 à 16, **caractérisée en ce que** la troisième unité de calcul (22) est disposée dans la centrale de service (21).
